# EUROPÄISCHE PATENTSCHRIFT

(11) **EP 3 340 357 B1**
(45) Veröffentlichungstag und Bekanntmachung des Hinweises auf die Patenterteilung: **29.07.2026**
(21) Anmeldenummer: 17199930.3
(22) Anmeldetag: 03.11.2017
(51) Int. Cl.: H01M 8/241, H01M 8/04089, H01M 8/0438, H01M 8/2457

(54) **VERFAHREN ZU EINER PRÜFUNG UND/ODER EINER KALIBRATION ZUMINDEST EINES GASKON-ZENTRATIONSSENSORS EINES BRENNSTOFFZELLENSYSTEMS**
METHOD FOR TESTING AND/OR CALIBRATION OF AT LEAST ONE GAS CONCENTRATION SENSOR OF A FUEL CELL SYSTEM
PROCÉDÉ DE VÉRIFICATION ET/OU D'ÉTALONNAGE D'AU MOINS UN CAPTEUR DE CONCENTRATION DE GAZ D'UN SYSTÈME DE PILE À COMBUSTIBLE

(30) Priorität: 20.12.2016 DE 102016225597
(43) Veröffentlichungstag der Anmeldung: 27.06.2018
(73) Patentinhaber: Robert Bosch GmbH, 70442 Stuttgart (DE)
(72) Erfinder: Kemmer, Helerson, 71665 Vaihingen (DE)

(56) Entgegenhaltungen:
- DE-A1- 10 231 208
- DE-B4- 102011 103 403
- JP-A- 2008 130 495
- US-A1- 2009 064 764
- US-A1- 2009 095 051
- US-A1- 2012 291 522

## Beschreibung

### Stand der Technik

Es ist bereits ein Verfahren zu einer Prüfung und/oder einer Kalibration eines Gaskonzentrationssensors vorgeschlagen worden, welcher zu einer Überwachung einer Wasserstoffgaskonzentration in einem Abgas und/oder einem Umgebungsbereich einer Brennstoffzelleneinheit vorgesehen ist. Dabei wird der Wasserstoffgaskonzentrationssensor ausgebaut und anschließend mit einem Prüfgas

Aus der DE 10 2011 103403 B4 ist eine Verfahren zu einer Prüfung und einer Kalibration zumindest eines Gaskonzentrationssensors gemäß dem Oberbegriff des Anspruchs 1 bekannt.

### Offenbarung der Erfindung

Die Erfindung bezieht sich auf ein Verfahren zu einer Prüfung und einer Kalibration zumindest eines Gaskonzentrationssensors gemäß Anspruch 1 und auf ein Brennstoffzellensystem gemäss Anspruch 10.

Die Erfindung geht aus von einem Verfahren zu einer Prüfung und/oder einer Kalibration zumindest eines Gaskonzentrationssensors, insbesondere eines Wasserstoffgaskonzentrationssensors, eines Brennstoffzellensystems, welcher zu einer Überwachung einer Gaskonzentration, insbesondere einer Wasserstoffgaskonzentration, in einem Abgas und/oder einem Umgebungsbereich einer Brennstoffzelleneinheit vorgesehen ist.

Es wird vorgeschlagen, dass der Gaskonzentrationssensor in zumindest einem Verfahrensschritt, insbesondere in einem Prüfverfahrensschritt und/oder in einem Kalibrationsverfahrensschritt, in einem mit der Brennstoffzelleneinheit fluidtechnisch verbundenen Zustand geprüft und/oder kalibriert wird. Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Unter einem "Brennstoffzellensystem" soll in diesem Zusammenhang insbesondere ein System verstanden werden, welches zu einer, insbesondere stationären und/oder mobilen, Gewinnung elektrischer und/oder thermischer Energie vorgesehen ist. Vorteilhaft ist das Brennstoffzellensystem dabei als Brennstoffzellenfahrzeug ausgebildet. Insbesondere kann das Brennstoffzellensystem zumindest die Brennstoffzelleneinheit, den Gaskonzentrationssensor und/oder zumindest eine Prüf- und/oder Kalibriereinheit umfassen, welche insbesondere dazu vorgesehen ist, das Verfahren zur Prüfung und/oder Kalibration des Gaskonzentrationssensors auszuführen. Insbesondere kann die Prüf- und/oder Kalibriereinheit dabei eine Recheneinheit und/oder eine Interfaceeinheit umfassen. Unter einem "Gaskonzentrationssensor" soll insbesondere ein, insbesondere mit der Brennstoffzelleneinheit in Wirkverbindung stehender, Sensor verstanden werden, welcher dazu vorgesehen ist, zumindest eine Konzentration, insbesondere eine Stoffmengenkonzentration, eine Massenkonzentration, eine Volumenkonzentration und/oder eine Teilchendichte, zumindest eines Gases, insbesondere eines mit zumindest einem weiteren Gas vermischten Gases, zumindest qualitativ und vorteilhaft quantitativ zu erfassen. Vorteilhaft ist der Gaskonzentrationssensor ferner dazu vorgesehen, eine erfasste Konzentration in zumindest ein, insbesondere elektrisches, mit der Konzentration korreliertes Erfassungssignal umzuwandeln und das Erfassungssignal insbesondere zu einer Anzeige, einer Speicherung, einer Überprüfung und/oder einer Weiterverarbeitung bereitzustellen. Bevorzugt ist der Gaskonzentrationssensor dabei als Wasserstoffgaskonzentrationssensor ausgebildet und insbesondere dazu vorgesehen, zumindest eine Wasserstoffgaskonzentration zu erfassen. Zudem soll unter einer "Überwachung einer Gaskonzentration" insbesondere ein Vorgang verstanden werden, bei welchem eine Gaskonzentration über einen längeren Zeitraum, vorteilhaft einen Zeitraum von zumindest 5 min und besonders vorteilhaft einen Zeitraum von zumindest 30 min, ermittelt, insbesondere bestimmt und/oder gemessen, und/oder aufgezeichnet und bevorzugt mit zumindest einem Grenzwert verglichen wird. Bevorzugt wird die Gaskonzentration dabei in regelmäßigen zeitlichen Abständen ermittelt. Besonders vorteilhaft wird in zumindest einem Betriebszustand, in welchem die Gaskonzentration außerhalb eines, vorteilhaft zumindest teilweise durch den Grenzwert definierten, Sollwertintervalls liegt, ein Warnhinweis erzeugt und vorteilhaft mittels einer, insbesondere haptischen, akustischen und/oder optischen, Ausgabeeinheit ausgegeben. Vorzugsweise ist der Gaskonzentrationssensor dabei in zumindest einem Normalbetriebszustand zu einer Überwachung der Gaskonzentration in dem Abgas und/oder dem Umgebungsbereich der Brennstoffzelleneinheit vorgesehen. Zudem soll unter einer "Prüfung eines Gaskonzentrationssensors" insbesondere eine zumindest qualitative und vorteilhaft quantitative Feststellung einer Funktionstüchtigkeit, einer Fehleranfälligkeit und/oder einer Messgenauigkeit des Gaskonzentrationssensors, insbesondere durch zumindest einen Vergleich zumindest zweier Werte und/oder Parameter, verstanden werden. Des Weiteren soll unter einer "Kalibration eines Gaskonzentrationssensors" insbesondere eine Einstellung und/oder Justierung eines Gaskonzentrationssensors insbesondere auf einen Sollwert verstanden werden. Insbesondere kann es sich bei der Kalibration auch um eine Eichung handeln. Besonders vorteilhaft wird der Gaskonzentrationssensor dabei zur Prüfung und/oder Kalibration in zumindest einem Verfahrensschritt mit einem Prüfgas beaufschlagt. Vorzugsweise wird der Gaskonzentrationssensor in zumindest einem, insbesondere von einem Normalbetriebszustand verschiedenen, Betriebszustand, vorteilhaft einem Wartungsbetriebszustand, und insbesondere in einem mit der Brennstoffzelleneinheit fluidtechnisch verbundenen Zustand geprüft und/oder kalibriert.

Ferner soll unter einer "Brennstoffzelleneinheit" insbesondere eine Einheit verstanden werden, welche zumindest eine Brennstoffzelle, insbesondere eine Wasserstoff-Sauerstoff-Brennstoffzelle und vorzugsweise eine Polymerelektrolytbrennstoffzelle, umfasst und insbesondere zu einer Umwandlung und/oder Umsetzung zumindest eines Brennstoffs, insbesondere eines Wasserstoffgases, und zumindest eines Oxidationsmittels, insbesondere eines Sauerstoffgases, in eine elektrische und/oder thermische Energie vorgesehen ist. Vorteilhaft weist die Brennstoffzelleneinheit eine Vielzahl an, insbesondere in Reihe geschalteten, vorteilhaft als Brennstoffzellenstack ausgebildeten, Brennstoffzellen auf. Des Weiteren soll unter einem "Abgas einer Brennstoffzelleneinheit" insbesondere ein Gas und/oder ein Gasgemisch verstanden werden, welches insbesondere bei der Umwandlung und/oder Umsetzung des Brennstoffs und des Oxidationsmittels erzeugt wird und vorteilhaft für eine weitere Umwandlung und/oder Umsetzung mittels der Brennstoffzelleneinheit ungeeignet ist. Ferner soll unter einem "fluidtechnisch verbundenen Zustand" zweier Objekte insbesondere ein Zustand verstanden werden, in welchem ein vorteilhaft ungehinderter Fluidfluss zwischen den Objekten möglich ist. Darüber hinaus soll unter einer "Recheneinheit" insbesondere eine elektrische und/oder elektronische Einheit verstanden werden, welche insbesondere einen Informationseingang, eine Informationsverarbeitung und eine Informationsausgabe aufweist. Vorteilhaft weist die Recheneinheit ferner zumindest einen Prozessor, zumindest einen Speicher, zumindest ein Ein- und/oder Ausgabemittel, zumindest ein Betriebsprogramm, zumindest eine Regelroutine, zumindest eine Steuerroutine, zumindest eine Berechnungsroutine und/oder zumindest eine Auswerteroutine auf. Bevorzugt kann die Recheneinheit dabei in einen Bordcomputer des vorteilhaft als Brennstoffzellenfahrzeug ausgebildeten Brennstoffzellensystems integriert sein. Ferner soll unter einer "Interfaceeinheit" insbesondere eine elektrische und/oder elektronische Einheit verstanden werden, welche dazu vorgesehen ist, insbesondere einem Benutzer, zumindest teilweise eine Einsicht und vorteilhaft einen Zugriff in/auf Daten der Recheneinheit, insbesondere in/auf mit einer Prüfung und/oder einer Kalibration des Gaskonzentrationssensors korrelierte Daten, zu ermöglichen. Insbesondere umfasst die Interfaceeinheit dazu wenigstens eine Benutzerschnittstelle. Die Benutzerschnittstelle kann als beliebige Benutzerschnittstelle ausgebildet sein und beispielsweise zu einer Gesteneingabe und/oder einer Gestensteuerung, einer Spracheingabe und/oder einer Sprachsteuerung und/oder einer Berührungseingabe und/oder einer Berührungssteuerung vorgesehen sein. Zudem kann die Interfaceeinheit wenigstens eine, insbesondere haptische, akustische und/oder bevorzugt optische, Ausgabeeinheit, vorteilhaft die zuvor genannte Ausgabeeinheit, zur Ausgabe der Daten aufweisen. Durch diese Ausgestaltung kann vorteilhaft eine Effizienz, insbesondere eine Wartungseffizienz, eine Kosteneffizienz und/oder eine Zeiteffizienz, verbessert werden. Zudem kann eine schnelle, unkomplizierte und/oder materialschonende Wartung ermöglicht werden.

Ferner wird vorgeschlagen, dass zur Prüfung und/oder Kalibration des Gaskonzentrationssensors in zumindest einem Verfahrensschritt, insbesondere Justierverfahrensschritt, eine Gaskonzentration wenigstens eines Bestandteils wenigstens eines Prüfgases, insbesondere des bereits zuvor genannten Prüfgases, auf einen definierten Referenzwert, insbesondere durch eine Einstellung eines definierten Massen- und/oder Volumenstroms des Bestandteils, eingestellt wird und in zumindest einem Verfahrensschritt, insbesondere Messverfahrensschritt, ein Messwert der Gaskonzentration mittels des Gaskonzentrationssensors ermittelt wird. Vorteilhaft wird der Referenzwert dabei vor einer Inbetriebnahme der Brennstoffzelleneinheit bestimmt und insbesondere in zumindest einer Speichereinheit des Brennstoffzellensystems hinterlegt. Hierdurch kann insbesondere eine einfache Reproduzierbarkeit des Verfahrens erreicht werden.

Der Bestandteil des Prüfgases könnte beispielsweise ein sauerstoffhaltiges Gas, vorteilhaft Luft, und/oder ein Gasgemisch, insbesondere aus dem sauerstoffhaltigen Gas und einem Wasserstoffgas, sein. Insbesondere um ein vorteilhaft breites Anwendungsgebiet des Verfahrens zu ermöglichen, wird vorgeschlagen, dass der Bestandteil des Prüfgases Wasserstoffgas ist. Bevorzugt wird das Wasserstoffgas in zumindest einem Normalbetriebszustand, insbesondere dem bereits zuvor genannten Normalbetriebszustand, als Betriebsgas, vorteilhaft als Brennstoff, der Brennstoffzelleneinheit verwendet und insbesondere der Brennstoffzelleneinheit zugeführt.

Zudem wird vorgeschlagen, dass zur Prüfung des Gaskonzentrationssensors in zumindest einem Verfahrensschritt, insbesondere Prüfverfahrensschritt, der Messwert mit einem mit dem Referenzwert korrelierten Sollwert verglichen wird, insbesondere zur Ermittlung eines Prüfergebnisses. Insbesondere kann der Sollwert dabei dem Referenzwert entsprechen. Das Prüfergebnis entspricht dabei insbesondere einer Abweichung des Messwerts von dem Sollwert. Insbesondere kann das Prüfergebnis dabei positiv sein, falls eine Abweichung des Messwerts von dem Sollwert unterhalb eines definierten und/oder definierbaren Grenzwerts liegt. Zudem kann das Prüfergebnis insbesondere negativ sein, falls eine Abweichung des Messwerts von dem Sollwert oberhalb des definierten und/oder definierbaren Grenzwerts liegt. Vorteilhaft wird das Prüfergebnis, insbesondere ein positives und/oder ein negatives Prüfergebnis, in zumindest einer Speichereinheit des Brennstoffzellensystems hinterlegt. Zudem wird ein negatives Prüfergebnis vorteilhaft mittels der Ausgabeeinheit, insbesondere visuell, akustisch und/oder haptisch, ausgegeben. Hierdurch kann insbesondere eine zuverlässige Prüfung realisiert werden.

Weiter wird vorgeschlagen, dass zur Kalibration des Gaskonzentrationssensors in zumindest einem Verfahrensschritt, insbesondere Kalibrationsverfahrensschritt, eine Sensorkennlinie erstellt wird und anhand der Sensorkennlinie der Gaskonzentrationssensor kalibriert wird. Insbesondere wird dabei zur Kalibration des Gaskonzentrationssensors in zumindest einem weiteren Justierverfahrensschritt eine Gaskonzentration wenigstens eines Bestandteils des Prüfgases, vorteilhaft des Wasserstoffgases, auf zumindest einen weiteren Referenzwert, insbesondere durch eine Einstellung zumindest eines weiteren definierten Massen- und/oder Volumenstroms des Bestandteils, eingestellt und in zumindest einem weiteren Messverfahrensschritt zumindest ein weiterer Messwert der Gaskonzentration mittels des Gaskonzentrationssensors ermittelt. Ferner wird die Sensorkennlinie insbesondere mittels des Referenzwerts, des weiteren Referenzwerts, des Messwerts und des weiteren Messwerts, erstellt. Unter einer "Sensorkennlinie" soll in diesem Zusammenhang insbesondere eine, insbesondere für den Gaskonzentrationssensor charakteristische, Kennlinie verstanden werden, welche den Gaskonzentrationssensor insbesondere gegenüber einem weiteren Gaskonzentrationssensor desselben Typs unterscheidet. Vorteilhaft entspricht die Sensorkennlinie dabei einer Zuordnung von zumindest zwei verschiedenen Messwerten der Gaskonzentration des Gaskonzentrationssensors zu zumindest zwei verschiedenen Referenzwerten der Gaskonzentration. Hierdurch kann eine vorteilhafte Kalibration, insbesondere für unterschiedliche Gaskonzentrationen, des Gaskonzentrationssensors ermöglicht werden.

Das Prüfgas kann ein vorgefertigtes, insbesondere in einer Gasspeichereinheit und vorzugsweise in einem Gastank gelagertes, Gas und/oder Gasgemisch sein. Insbesondere um eine flexible Zusammensetzung des Prüfgases zu ermöglichen, wird jedoch vorgeschlagen, dass in zumindest einem Verfahrensschritt zur Erzeugung des Prüfgases wenigstens zwei Gase, insbesondere ein erstes Gas, vorzugsweise Wasserstoffgas, und wenigstens ein zweites Gas, vorzugsweise ein sauerstoffhaltiges Gas, besonders bevorzugt Luft, zusammengeführt und insbesondere gemischt werden.

Des Weiteren wird vorgeschlagen, dass wenigstens ein Bestandteil des Prüfgases aus einem Betriebsgas, insbesondere zumindest einem Brennstoff und/oder zumindest einem Oxidationsmittel, der Brennstoffzelleneinheit gebildet wird. Vorteilhaft sind sämtliche Bestandteile des Prüfgases aus Betriebsgasen der Brennstoffzelleneinheit gebildet. Unter einem "Betriebsgas" soll dabei insbesondere ein Gas verstanden werden, welches in zumindest einem Normalbetriebszustand, insbesondere dem bereits zuvor genannten Normalbetriebszustand, zu einem Betrieb der Brennstoffzelleneinheit und/oder zu einer Umwandlung und/oder Umsetzung in der Brennstoffzelleneinheit vorgesehen ist. Hierdurch kann insbesondere eine Bauteile- und/oder eine Kosteneffizienz erreicht werden.

Das Prüfgas kann beispielsweise durch eine speziell hierfür vorgesehene Leitung geleitet werden, welche insbesondere separat von Zuführleitungen und/oder Abführleitungen der Brennstoffzelleneinheit und/oder des Gaskonzentrationssensors in dem Normalbetriebszustand ist. Vorzugsweise wird jedoch vorgeschlagen, dass das Prüfgas in zumindest einem Verfahrensschritt, insbesondere zur Prüfung und/oder zur Kalibration des Gaskonzentrationssensors, zumindest abschnittsweise durch wenigstens eine Fluidleitung, insbesondere zumindest eine Zuführleitung, vorteilhaft eine Brennstoffzuleitung und/oder eine Oxidationsmittelzuleitung, und/oder wenigstens eine Abführleitung, vorteilhaft eine Rezirkulationsleitung und/oder eine Abgasleitung, der Brennstoffzelleneinheit zum Gaskonzentrationssensor geleitet wird. Unter einer "Zuführleitung einer Brennstoffzelleneinheit" soll insbesondere eine, insbesondere zumindest in dem Normalbetriebszustand mit der Brennstoffzelleneinheit fluidtechnisch verbundene, Fluidleitung verstanden werden, welche dazu vorgesehen ist, zumindest ein Betriebsgas, insbesondere den Brennstoff und/oder das Oxidationsmittel, der Brennstoffzelleneinheit zuzuführen. Vorzugsweise verbindet die Zuführleitung dabei eine Betriebsgasspeichereinheit, wie beispielsweise einen Gastank, mit der Brennstoffzelleneinheit. Alternativ oder zusätzlich kann die Zuführleitung einen Umgebungsbereich des Brennstoffzellensystems mit der Brennstoffzelleneinheit verbinden. Ferner soll unter einer "Abführleitung einer Brennstoffzelleneinheit" insbesondere eine, insbesondere zumindest in dem Normalbetriebszustand mit der Brennstoffzelleneinheit fluidtechnisch verbundene, Fluidleitung verstanden werden, welche dazu vorgesehen ist, zumindest ein Restgas und/oder ein Abgas der Brennstoffzelleneinheit von der Brennstoffzelleneinheit abzuführen. Bevorzugt kann die Abführleitung die Brennstoffzelleneinheit dabei mit einem Umgebungsbereich des Brennstoffzellensystems verbinden. Durch diese Ausgestaltung kann insbesondere eine Bauteileeffizienz und/oder eine Kosteneffizienz verbessert werden. Ferner kann vorteilhaft eine einfache Umrüstung bestehender Brennstoffzellensysteme zur Durchführung des Verfahrens ermöglicht werden.

Weiter wird vorgeschlagen, dass in zumindest einem Verfahrensschritt zu einer Beaufschlagung des Gaskonzentrationssensors mit dem Prüfgas eine, vorteilhaft als ein Schlauch ausgebildete, Gasverbindungsleitung manuell, bevorzugt händisch, mit dem Gaskonzentrationssensor verbunden wird. Dadurch kann insbesondere eine Flexibilität erhöht werden. Vorteilhaft ist es hierdurch möglich beliebige Gaskonzentrationssensoren in einem Umgebungsbereich der Brennstoffzelleneinheit zu prüfen und/oder zu kalibrieren.

Ferner wird vorgeschlagen, dass in zumindest einem Verfahrensschritt, insbesondere zeitlich unmittelbar vor der Prüfung und/oder der Kalibration des Gaskonzentrationssensors, wenigstens eine mit dem Gaskonzentrationssensor fluidtechnisch verbundene Gasleitung, insbesondere eine Zuführleitung und/oder eine Abführleitung der Brennstoffzelleneinheit, durchgespült wird, insbesondere zu einer Entfernung eines in der Gasleitung befindlichen Restgases. Insbesondere wird hierdurch sichergestellt, dass sich in der Gasleitung lediglich das Prüfgas und/oder der Bestandteil des Prüfgases befindet, wodurch insbesondere eine Zuverlässigkeit und/oder eine Reproduzierbarkeit der Prüfung und/oder der Kalibration verbessert werden kann.

Das Verfahren zur Prüfung und/oder Kalibration des Gaskonzentrationssensors des Brennstoffzellensystems und das Brennstoffzellensystem sollen hierbei nicht auf die oben beschriebene Anwendung und Ausführungsform beschränkt sein. Insbesondere können das Verfahren zur Prüfung und/oder Kalibration des Gaskonzentrationssensors des Brennstoffzellensystems und das Brennstoffzellensystem zu einer Erfüllung einer hierin beschriebenen Funktionsweise eine von einer hierin genannten Anzahl von einzelnen Verfahrensschritten, Elementen, Bauteilen und Einheiten abweichende Anzahl aufweisen.

### Zeichnung

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination.

Es zeigen:
- Fig. 1: ein Teil eines beispielhaften Brennstoffzellensystems zur Durchführung eines Verfahrens zu einer Prüfung und/oder Kalibration zumindest eines Gaskonzentrationssensors,
- Fig. 2: ein beispielhaftes Ablaufdiagramm des Verfahrens zu einer Prüfung des Gaskonzentrationssensors,
- Fig. 3: ein detailliertes Ablaufdiagramm einer Durchspülung einer Gasleitung des Brennstoffzellensystems,
- Fig. 4: ein detailliertes Ablaufdiagramm eines Justierverfahrensschritts für ein Wasserstoffgas,
- Fig. 5: ein detailliertes Ablaufdiagramm eines Justierverfahrensschritts für Luft,
- Fig. 6: ein beispielhaftes Ablaufdiagramm des Verfahrens zu einer Kalibration des Gaskonzentrationssensors und
- Fig. 7: ein Teil des Brennstoffzellensystems mit einer manuell angebrachten Gasverbindungsleitung und weiteren Gaskonzentrationssensoren.

### Beschreibung des Ausführungsbeispiels

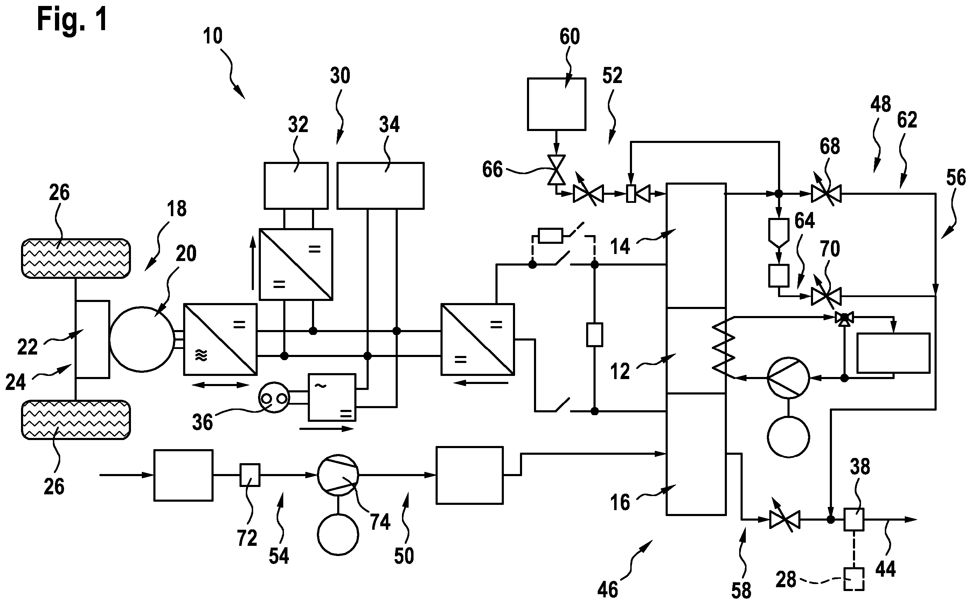

Figur 1 zeigt zumindest einen Teil eines beispielhaft als Brennstoffzellenfahrzeug ausgebildeten Brennstoffzellensystems 10 in einer schematischen Darstellung. Alternativ könnte ein Brennstoffzellensystem als ein stationäres Brennstoffzellensystem ausgebildet sein.

Das Brennstoffzellensystem 10 umfasst eine Brennstoffzelleneinheit 12. Die Brennstoffzelleneinheit 12 ist im vorliegenden Fall als ein Brennstoffzellenstack ausgebildet. Die Brennstoffzelleneinheit 12 weist eine Mehrzahl an Brennstoffzellen auf, welche im vorliegenden Fall als Polymerelektrolytbrennstoffzellen (PEMFC) ausgebildet sind. Die Brennstoffzelleneinheit 12 ist dazu vorgesehen, mit wenigstens einem Betriebsgas, insbesondere einem Brennstoff und/oder einem Brennstoffgemisch und einem Oxidationsmittel, betrieben zu werden. Im vorliegenden Fall entspricht ein erstes Betriebsgas der Brennstoffzelleneinheit 12, insbesondere der Brennstoff, Wasserstoffgas. Ferner entspricht ein zweites Betriebsgas der Brennstoffzelleneinheit 12, insbesondere das Oxidationsmittel, einem sauerstoffhaltigen Gas, im vorliegenden Fall insbesondere Luft. Die Brennstoffzelleneinheit 12 ist dazu vorgesehen, zumindest das erste Betriebsgas mittels eines elektrochemischen Verfahrens umzusetzen und dabei insbesondere elektrische Energie zu erzeugen. Hierzu umfasst jede der Brennstoffzellen eine Anode und eine Kathode. Alle Anoden bilden eine Anodeneinheit 14 der Brennstoffzelleneinheit 12 aus. Ferner bilden alle Kathoden eine Kathodeneinheit 16 der Brennstoffzelleneinheit 12 aus. Alternativ könnte eine Brennstoffzelleneinheit auch lediglich eine Brennstoffzelle aufweisen. Ferner könnte eine Brennstoffzelleneinheit zumindest eine Wasserstoff-Sauerstoff-Brennstoffzelle einer weiteren Bauart umfassen. Grundsätzlich ist auch denkbar, dass eine Brennstoffzelleneinheit zumindest eine alkalische Brennstoffzelle (AFC), zumindest eine Direktmethanol-Brennstoffzelle (DMFC), zumindest eine Direktethanol-Brennstoffzelle (DEFC), zumindest eine Ameisensäure-Brennstoffzelle (DFAFC), zumindest eine Phosphorsäure-Brennstoffzelle (PAFC), zumindest eine Schmelzkarbonat-Brennstoffzelle (MCFC), zumindest eine Festoxid-Brennstoffzelle (SOFC), zumindest eine mikrobielle Brennstoffzelle (MFC) und/oder zumindest eine weitere Brennstoffzelle aufweist.

Ferner weist das Brennstoffzellensystem 10 eine Antriebseinheit 18 auf. Die Antriebseinheit 18 ist dazu vorgesehen, einen Antrieb zu einer Bewegung des Brennstoffzellensystems 10 bereitzustellen. Hierzu umfasst die Antriebseinheit 18 eine Motoreinheit 20. Die Motoreinheit 20 ist als ein Elektromotor ausgebildet. Zudem ist die Motoreinheit 20 elektrisch mit der Brennstoffzelleneinheit 12 verbunden. Des Weiteren ist die Motoreinheit 20 dazu vorgesehen, in zumindest einem Betriebszustand aus der elektrischen Energie der Brennstoffzelleneinheit 12 ein Drehmoment zu erzeugen. Ferner umfasst die Antriebseinheit 18 eine Getriebeeinheit 22 und eine Antriebswelle 24, welche dazu vorgesehen sind, das Drehmoment an Räder 26 zu übertragen. Alternativ könnte ein Brennstoffzellensystem mehrere Antriebseinheiten aufweisen. Zudem könnte eine Antriebseinheit mehrere Motoreinheiten umfassen. Ferner könnte zumindest eine Motoreinheit als ein Kolbenmotor und/oder als ein Hybridmotor ausgebildet sein.

Zu einer Speicherung der elektrischen Energie umfasst das Brennstoffzellensystem 10 eine Energiespeichereinheit 30. Die Energiespeichereinheit 30 weist ein Energiespeicherelement 32 auf. Das Energiespeicherelement 32 ist als eine Niedrigspannungsbatterie ausgebildet. Ferner ist das Energiespeicherelement 32 elektrisch mit der Motoreinheit 20 und der Brennstoffzelleneinheit 12 verbunden. Zudem umfasst die Energiespeichereinheit 30 ein weiteres Energiespeicherelement 34. Das weitere Energiespeicherelement 34 ist als eine Traktionsbatterie ausgebildet. Ferner ist das weitere Energiespeicherelement 34 elektrisch mit der Motoreinheit 20 und der Brennstoffzelleneinheit 12 verbunden. Das Energiespeicherelement 32 und/oder das weitere Energiespeicherelement 34 können über die Brennstoffzelleneinheit 12 geladen werden. Alternativ oder zusätzlich kann das weitere Energiespeicherelement 34 auch über eine externe Energiequelle 36, insbesondere Strom- und/oder Spannungsquelle, geladen werden. Alternativ könnte eine Energiespeichereinheit eines Brennstoffzellensystems eine von zwei verschiedene Anzahl an, insbesondere elektrischen, Energiespeicherelementen aufweisen. Es ist auch denkbar, dass zumindest ein Energiespeicherelement lediglich mit einer Brennstoffzelleneinheit oder lediglich mit einer Motoreinheit elektrisch verbunden ist.

Ferner umfasst das Brennstoffzellensystem 10 zumindest einen Gaskonzentrationssensor 38. Der Gaskonzentrationssensor 38 ist im vorliegenden Fall als Wasserstoffgaskonzentrationssensor ausgebildet. Der Gaskonzentrationssensor 38 ist in einem Normalbetriebszustand zu einer Überwachung einer Gaskonzentration, im vorliegenden Fall insbesondere einer Wasserstoffgaskonzentration, in einem Abgas der Brennstoffzelleneinheit 12 vorgesehen. Hierzu ist der Gaskonzentrationssensor 38 an einer Abgasleitung 44 des Brennstoffzellensystems 10 angeordnet.

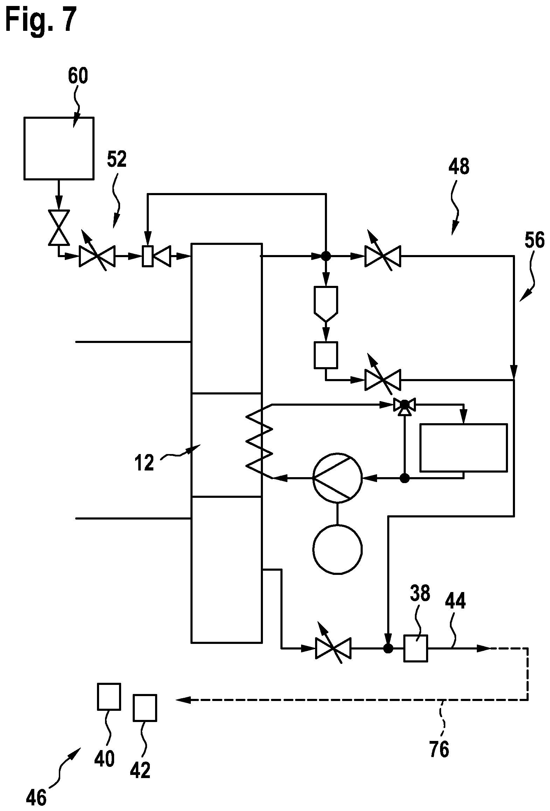

Zusätzlich umfasst das Brennstoffzellensystem 10 beispielhaft zwei weitere Gaskonzentrationssensoren 40, 42 (vgl. insbesondere Figur 7). Die weiteren Gaskonzentrationssensoren 40, 42 sind als Wasserstoffgaskonzentrationssensoren ausgebildet. Die weiteren Gaskonzentrationssensoren 40, 42 sind zu einer Überwachung einer weiteren Gaskonzentration, im vorliegenden Fall insbesondere einer Wasserstoffgaskonzentration, in einem Umgebungsbereich 46 der Brennstoffzelleneinheit 12 vorgesehen. Alternativ könnte ein Brennstoffzellensystem zumindest einen von einem Wasserstoffgaskonzentrationssensor verschiedenen Gaskonzentrationssensor, beispielsweise zumindest einen Sauerstoffgaskonzentrationssensor, aufweisen. Es ist auch denkbar, dass zumindest ein Gaskonzentrationssensor in die Brennstoffzelleneinheit integriert ist. Zudem könnte ein Brennstoffzellensystem genau einen Gaskonzentrationssensor, genau zwei Gaskonzentrationssensoren oder zumindest vier Gaskonzentrationssensoren aufweisen.

Des Weiteren umfasst das Brennstoffzellensystem 10 eine Leitungseinheit 48. Die Leitungseinheit 48 umfasst eine Betriebsgasspeichereinheit 60. Die Betriebsgasspeichereinheit 60 ist als Gastank, im vorliegenden Fall insbesondere als Wasserstoffgastank, ausgebildet. Ferner weist die Leitungseinheit 48 eine Zuführleitung 52 auf, welche die Betriebsgasspeichereinheit 60 mit der Brennstoffzelleneinheit 12, im vorliegenden Fall insbesondere der Anodeneinheit 14, fluidtechnisch verbindet. Dabei durchläuft die Zuführleitung 52 zumindest ein verschließbares Ventil 66. Die Zuführleitung 52 ist zumindest dazu vorgesehen, der Brennstoffzelleneinheit 12 das erste Betriebsgas, insbesondere den Brennstoff, zuzuführen. Des Weiteren umfasst die Leitungseinheit 48 eine Abführleitung 56, welche die Brennstoffzelleneinheit 12, im vorliegenden Fall insbesondere die Anodeneinheit 14, mit der Abgasleitung 44 fluidtechnisch verbindet. Dabei durchläuft die Abführleitung 56 zumindest ein verschließbares weiteres Ventil 68, 70. Ein erster Leitungszweig 62 der Abführleitung 56, welcher insbesondere zu einer direkten Gasabführung vorgesehen ist, kann dabei mittels eines weiteren ersten Ventils 68 der weiteren Ventile 68, 70 verschlossen werden. Ferner kann ein zweiter Leitungszweig 64 der Abführleitung 56, welcher insbesondere zu einer Wasserabscheidung vorgesehen ist, mittels eines weiteren zweiten Ventils 70 der weiteren Ventile 68, 70 verschlossen werden. Alternativ könnte eine Leitungseinheit mehrere Betriebsgasspeichereinheiten und/oder weitere Gasspeichereinheiten, mehrere Zuführleitungen, mehrere Abführleitungen und/oder zumindest eine weitere Leitung aufweisen. Ferner könnte zumindest eine Betriebsgasspeichereinheit und/oder Gasspeichereinheit als ein Sauerstoffgastank oder als ein Tank zu einer Aufnahme eines weiteren Gases ausgebildet sein. Zudem könnte eine Zuführleitung und/oder eine Abführleitung eine abweichende Anzahl von Leitungszweigen und/oder von Ventilen aufweisen.

Ferner weist das Brennstoffzellensystem 10 eine weitere Leitungseinheit 50 auf. Die weitere Leitungseinheit 50 umfasst eine weitere Zuführleitung 54. Die weitere Zuführleitung 54 ist mit der Brennstoffzelleneinheit 12, im vorliegenden Fall insbesondere der Kathodeneinheit 16, fluidtechnisch verbunden. Die weitere Zuführleitung 54 ist zumindest dazu vorgesehen, der Brennstoffzelleneinheit 12 das zweite Betriebsgas, insbesondere das Oxidationsmittel, zuzuführen. Zudem umfasst die weitere Leitungseinheit 50 eine weitere Abführleitung 58. Die weitere Abführleitung 58 verbindet die Brennstoffzelleneinheit 12, im vorliegenden Fall insbesondere die Kathodeneinheit 16, fluidtechnisch mit der Abgasleitung 44. Die weitere Abführleitung 58 ist dazu vorgesehen ein Rest- und/oder ein Abgas der Brennstoffzelleneinheit 12 abzuführen. Zu einer Erfassung des zweiten Betriebsgases, insbesondere zur Messung eines Luftstroms, umfasst die weitere Leitungseinheit 50 ferner wenigstens einen Massenstrom-Sensor 72, im vorliegenden Fall insbesondere einen Luft-Massenstrom-Sensor. Im vorliegenden Fall ist der Massenstrom-Sensor 72 an der weiteren Zuführleitung 54 angeordnet. Zudem weist die weitere Leitungseinheit 50 einen Verdichter 74 auf. Im vorliegenden Fall durchläuft die weitere Zuführleitung 54 den Verdichter 74. Alternativ könnte ein Brennstoffzellensystem eine von zwei verschiedene Anzahl an Leitungseinheiten aufweisen. Ferner könnte eine weitere Zuführleitung einer Brennstoffzelleneinheit ein Sauerstoffgas oder ein weiteres Gas zuführen. Zudem könnte eine weitere Abführleitung eine Kathodeneinheit und/oder eine Anodeneinheit direkt mit einem Freiluftbereich fluidtechnisch verbinden. Es ist auch denkbar zumindest einen von einem Massenstromsensor verschiedenen Sensor, beispielsweise einen Druck- und/oder Temperatursensor, an einer weiteren Zuführleitung und/oder an einer weiteren Abführleitung anzubringen.

Zudem umfasst das Brennstoffzellensystem 10 eine Prüf- und/oder Kalibriereinheit 28. Die Prüf- und/oder Kalibriereinheit 28 weist eine Recheneinheit auf, welche beispielsweise in einen Bordcomputer des als Brennstoffzellenfahrzeug ausgebildeten Brennstoffzellensystems 10 integriert sein kann. Alternativ könnte ein Brennstoffzellensystem mehrere Prüf- und/oder Kalibriereinheiten umfassen. Zudem könnte zumindest eine Prüf- und/oder Kalibriereinheit mehrere Recheneinheiten aufweisen. Ferner könnte zumindest eine Prüf- und/oder Kalibriereinheit zumindest eine Interfaceeinheit aufweisen, welche insbesondere dazu vorgesehen sein kann, eine haptische, akustische und/oder bevorzugt optische Ausgabe bereitzustellen. Ferner könnte zumindest eine Prüf- und/oder Kalibriereinheit von einem Bordcomputer separat ausgebildet sein.

Die Prüf- und/oder Kalibriereinheit 28 ist in zumindest einem Betriebszustand dazu vorgesehen, ein Verfahren zu einer Prüfung und/oder einer Kalibration zumindest eines der Gaskonzentrationssensoren 38, 40, 42 auszuführen. Hierbei wird der Gaskonzentrationssensor 38, 40, 42 in zumindest einem Verfahrensschritt 150, 250 in einem mit der Brennstoffzelleneinheit 12 fluidtechnisch verbundenen Zustand geprüft und/oder kalibriert. Der fluidtechnisch verbundene Zustand des Gaskonzentrationssensors 38, 40, 42 ist ein eingebauter Zustand. Im vorliegenden Fall ist der Gaskonzentrationssensor 38 durch die Abgasleitung 44, durch die Abführleitung 56 und durch die weitere Abführleitung 58 fluidtechnisch mit der Brennstoffzelleneinheit 12 verbunden. Zur Prüfung und/oder Kalibrierung des Gaskonzentrationssensors 38 wird der Gaskonzentrationssensor 38 dabei in zumindest einem von dem Normalbetriebszustand verschiedenen Betriebszustand mit einem Prüfgas beaufschlagt. Das Prüfgas besteht dabei aus zumindest einem der Betriebsgase. Im vorliegenden Fall ist das Prüfgas als Mischgas ausgebildet und besteht zumindest teilweise aus dem ersten Betriebsgas, insbesondere Wasserstoffgas, und zumindest teilweise aus dem zweiten Betriebsgas, insbesondere Luft. Alternativ könnten mehrere Gaskonzentrationssensoren geprüft und/oder kalibriert werden, insbesondere gleichzeitig, zeitlich versetzt zueinander und/oder nacheinander. Ferner könnte zumindest ein Gaskonzentrationssensor über zumindest eine von einer Abgasleitung und/oder einer Abführleitung verschiedene Leitung mit einer Brennstoffzelleneinheit verbunden sein. Grundsätzlich ist auch denkbar, dass ein Prüfgas als ein Reingas, beispielsweise als ein reines Wasserstoffgas oder als ein reines Sauerstoffgas ausgebildet ist.

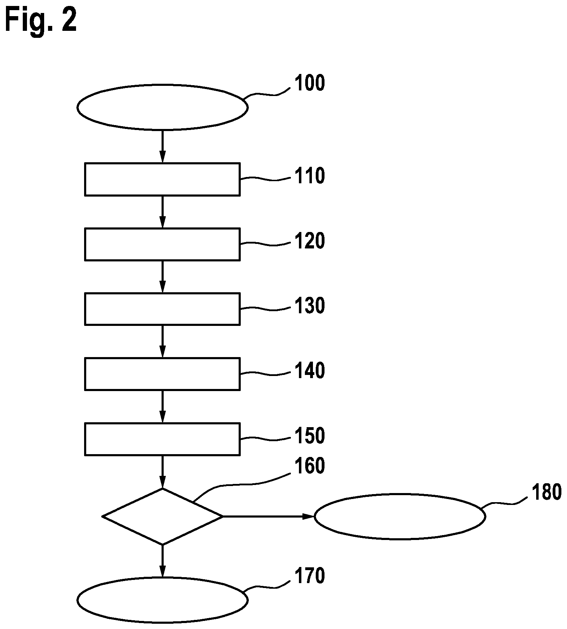

Figur 2 zeigt ein beispielhaftes Ablaufdiagramm des Verfahrens zur Prüfung des Gaskonzentrationssensors 38. In einem ersten Verfahrensschritt 100 wird eine Prüfung des Gaskonzentrationssensors 38 eingeleitet.

Ferner wird in einem zweiten Verfahrensschritt 110 wenigstens eine mit dem Gaskonzentrationssensor 38 fluidtechnisch verbundene Gasleitung, im vorliegenden Fall die Zuführleitung 52 und die Abführleitung 56, durchgespült. Hierzu wird im vorliegenden Fall ein möglichst reines Wasserstoffgas verwendet. Bevorzugt wird dazu das erste Betriebsgas, insbesondere aus der Betriebsgasspeichereinheit 60 verwendet. Alternativ könnten weitere Leitungen eines Brennstoffzellensystems, insbesondere weitere Zuführleitungen und/oder weitere Abführleitungen einer Brennstoffzelleneinheit, durchspült werden. Ferner könnte ein von einem Wasserstoffgas verschiedenes Gas, beispielsweise Luft und/oder ein anderes sauerstoffhaltiges Gas, zu einer Spülung der Leitungen verwendet werden.

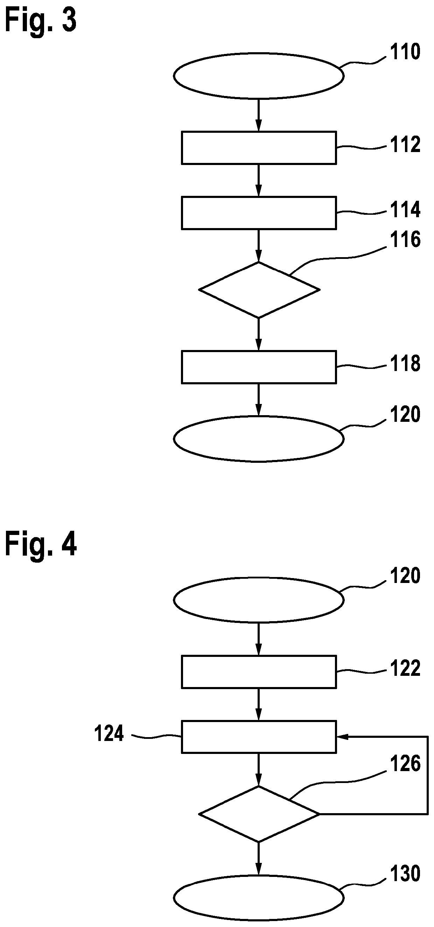

Ein dritter Verfahrensschritt 120 entspricht einem Justierverfahrensschritt. In dem dritten Verfahrensschritt 120 wird eine Gaskonzentration wenigstens eines Bestandteils des Prüfgases auf einen definierten Referenzwert eingestellt. Im vorliegenden Fall wird als Bestandteil des Prüfgas das zweite Betriebsgas, insbesondere Luft, verwendet. Das zweite Betriebsgas und/oder die Luft wird durch die weitere Abführleitung 58 geleitet. Figur 4 zeigt den dritten Verfahrensschritt 120 im Detail. Alternativ könnten sämtliche Bestandteile eines Prüfgases verschieden von einem Betriebsgas einer Brennstoffzelleneinheit ausgebildet sein. Ferner könnte als ein Bestandteil des Prüfgases ein reines Sauerstoffgas und/oder ein weiteres Gas verwendet werden. Zudem könnte zumindest ein Bestandteil des Prüfgases durch eine von einer Abführleitung der Brennstoffzelleneinheit verschieden ausgebildete Leitung geleitet werden.

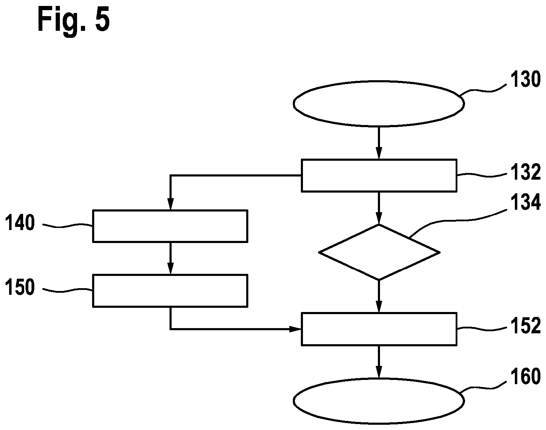

Ferner entspricht ein vierter Verfahrensschritt 130 einem weiteren Justierverfahrensschritt. In dem vierten Verfahrensschritt 130 wird eine Gaskonzentration des weiteren Bestandteils des Prüfgases auf einen definierten Referenzwert eingestellt. Im vorliegenden Fall wird als weiterer Bestandteil des Prüfgases das erste Betriebsgas, insbesondere Wasserstoffgas, verwendet. Das erste Betriebsgas und/oder das Wasserstoffgas wird durch die Abführleitung 56 geleitet. In Figur 5 ist der vierte Verfahrensschritt 130 detailliert gezeigt. Alternativ könnte in einem Justierverfahrensschritt eine Gaskonzentration eines von einem Wasserstoffgas und von Luft verschiedenen Bestandteils eines Prüfgases, beispielsweise von Sauerstoffgas, auf einen definierten Referenzwert eingestellt werden.

In einem fünften Verfahrensschritt 140 wird das Prüfgas erzeugt. Dazu werden wenigstens zwei Gase, im vorliegenden Fall insbesondere die Bestandteile des Prüfgases, insbesondere das Wasserstoffgas und die Luft, in der Abgasleitung 44 zusammengeführt. Das Prüfgas wird in dem fünften Verfahrensschritt 140 durch eine Fluidleitung der Brennstoffzelleneinheit 12, im vorliegenden Fall durch die Abgasleitung 44, zum Gaskonzentrationssensor 38 geleitet. Es ist auch denkbar, dass ein vorgemischtes, insbesondere in einer Gasspeichereinheit gelagertes Prüfgas verwendet wird. Ferner könnte ein Prüfgas durch eine eigens für einen solchen Zweck vorgesehene Leitung zu einem Gaskonzentrationssensor geleitet werden.

Ein sechster Verfahrensschritt 150 entspricht einem Messverfahrensschritt. In dem sechsten Verfahrensschritt 150 wird ein Messwert einer Gaskonzentration, im vorliegenden Fall der Wasserstoffgaskonzentration, in dem Prüfgas mittels des Gaskonzentrationssensors 38 ermittelt. Alternativ könnte in einem Messverfahrensschritt ein Messwert einer von einer Wasserstoffgaskonzentration verschiedenen Gaskonzentration, beispielsweise einer Sauerstoffgaskonzentration, ermittelt werden.

Ein siebter Verfahrensschritt 160 entspricht einem Prüfverfahrensschritt. Zur Prüfung des Gaskonzentrationssensors 38 wird in dem siebten Verfahrensschritt 160 der Messwert mit einem Sollwert, im vorliegenden Fall dem Referenzwert unter Berücksichtigung einer Toleranz, verglichen. Falls der Messwert von dem Sollwert nicht abweicht, wird ein positives Prüfungsergebnis 170, insbesondere in der Prüf- und/oder Kalibriereinheit 28, gespeichert. Weicht der Messwert von dem Sollwert ab, so wird ein negatives Prüfungsergebnis 180, welches insbesondere als ein Sensorfehler interpretiert wird, insbesondere in der Prüf- und/oder Kalibriereinheit 28, gespeichert. Alternativ könnte der Messwert mit einem mit dem Referenzwert korrelierten Sollwert verglichen werden.

Das beispielhafte Ablaufdiagramm in Figur 2 soll dabei insbesondere lediglich beispielhaft ein Verfahren zur Prüfung des Gaskonzentrationssensors 38 beschreiben. Insbesondere können einzelne Verfahrensschritte und/oder eine Abfolge der Verfahrensschritte variieren.

Der zweite Verfahrensschritt 110 wird im Folgenden unter Verweis auf Figur 3 im Detail beschrieben. Um eine hohe Verdünnung des Wasserstoffgases zu ermöglichen, wird in einem ersten Teilverfahrensschritt 112 eine Drehzahl des Verdichters 74 im Vergleich zu einer Drehzahl im Normalbetriebszustand erhöht. Ferner werden in einem zweiten Teilverfahrensschritt 114 die Ventile 66, 68, 70 der Leitungseinheit 48 geöffnet. Zudem wird in einem dritten Teilverfahrensschritt 116 geprüft, ob die Ventile 66, 68, 70 zumindest seit einer vorgegebenen minimalen Spüldauer geöffnet sind. Wird die Spüldauer überschritten, so werden die Ventile 66, 68, 70 in einem vierten Teilverfahrensschritt 118 wieder geschlossen und es folgt der dritte Verfahrensschritt 120.

Der dritte Verfahrensschritt 120 wird im Folgenden unter Verweis auf Figur 4 im Detail beschrieben. Um sicherzustellen, dass ein von dem Massenstrom-Sensor 72 gemessener Luftmassenstrom von einem Luftmassenstrom an dem Gaskonzentrationssensor 38 nicht abweicht, werden in einem fünften Teilverfahrensschritt 122 alle Luftventile (nicht gezeigt) geschlossen, welche ein zumindest teilweises Entweichen des Luftmassenstroms aus der weiteren Zuführleitung 54 und der weiteren Abführleitung 58 ermöglichen. Ferner wird in dem fünften Teilverfahrensschritt 122 eine Drosselklappe (nicht gezeigt) geöffnet. In einem sechsten Teilverfahrensschritt 124 wird der Verdichter 74 zu einer Einstellung eines mit einem Sollwert des Luftmassenstroms korrelierten Einstellwerts des Luftmassenstroms angesteuert. Solange in einem siebten Teilverfahrensschritt 126 ein Messwert des Luftmassenstroms von dem Sollwert abweicht, wird der sechste Teilverfahrensschritt 124 wiederholt, um den Einstellwert an den Sollwert anzupassen. Anschließend folgt der vierte Verfahrensschritt 130.

Der vierte Verfahrensschritt 130, der fünfte Verfahrensschritt 140 und der sechste Verfahrensschritt 150 werden im Folgenden zumindest teilweise unter Verweis auf Figur 5 im Detail beschrieben. In einem achten Teilverfahrensschritt 132 werden die Ventile 66, 68, 70 der Leitungseinheit 48 geöffnet. In einem neunten Teilverfahrensschritt 134 wird geprüft, ob die Ventile 66, 68, 70 zumindest über ein definiertes und/oder definierbares Zeitintervall, insbesondere eine Beharrungszeit, geöffnet waren. Wird das Zeitintervall überschritten, so werden in einem zehnten Teilverfahrensschritt 152 die Ventile 66, 68, 70 geschlossen. Hierdurch kann eine ausreichende Zeit zur Erzeugung des Prüfgases in dem fünften Verfahrensschritt 140 sowie eine ausreichende Messzeit in dem sechsten Verfahrensschritt 150, welche während einem geöffneten Zustand der Ventile 66, 68, 70 durchgeführt werden, sichergestellt werden. Es folgt der siebte Verfahrensschritt 160.

Die beispielhaften Ablaufdiagramme in den Figuren 3 bis 5 sind wiederum lediglich beispielhaft zu verstehen. Insbesondere können einzelne Teilverfahrensschritte und/oder eine Abfolge der Teilverfahrensschritte variieren.

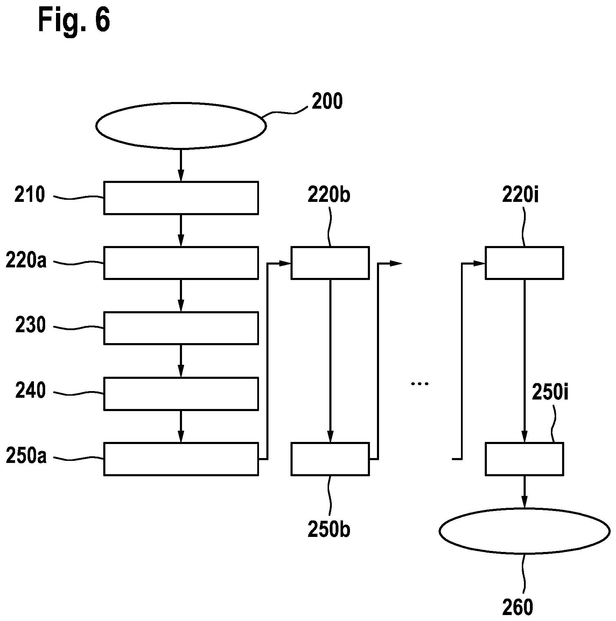

Im Folgenden wird unter Verweis auf Figur 6 das Verfahren zur Kalibration des Gaskonzentrationssensors 38 beschrieben. Die in Figur 6 gezeigten Verfahrensschritte 210, 220a, 230, 240, 250a, insbesondere ein neunter Verfahrensschritt 210, ein zehnter Verfahrensschritt 220a, ein elfter Verfahrensschritt 230, ein zwölfter Verfahrensschritt 240 und ein dreizehnter Verfahrensschritt 250a, sind dabei zumindest im Wesentlichen identisch zu den in Figur 2 dargestellten Verfahrensschritten 110, 120, 130, 140, 150, insbesondere dem zweiten Verfahrensschritt 110, dem dritten Verfahrensschritt 120, dem vierten Verfahrensschritt 130, dem fünften Verfahrensschritt 140 und dem sechsten Verfahrensschritt 150. In diesem Fall wird jedoch in einem achten Verfahrensschritt 200 eine Kalibration des Gaskonzentrationssensors 38 eingeleitet. Ferner wird zur Kalibration des Gaskonzentrationssensors 38 in zumindest einem vierzehnten Verfahrensschritt 260, insbesondere einem Kalibrationsverfahrenschritt, eine Sensorkennlinie erstellt und anhand der Sensorkennlinie der Gaskonzentrationssensor 38 kalibriert. Dem dreizehnten Verfahrensschritt 250a folgt eine zumindest einfache, insbesondere mehrfache Wiederholung des zehnten Verfahrensschritts 220a und des dreizehnten Verfahrensschritts 250a. Hierbei wird in den Verfahrensschritten 220b bis 220i ein eingestellter Luftmassenstrom variiert und somit eine variable Gaskonzentration erzeugt, wobei jede eingestellte Gaskonzentration in den Verfahrensschritten 250b bis 250i zur Erzeugung eines Messwerts mittels des Gaskonzentrationssensors 38 vermessen wird. Jeder Messwert der Gaskonzentration wird, insbesondere in der Prüf- und/oder Kalibriereinheit 28, gespeichert und zu einer Erzeugung der Sensorkennlinie genutzt. Die Sensorkennlinie wird in zumindest einem Betriebszustand des Gaskonzentrationssensors 38 zu einer Korrektur von Messwerten einer Gaskonzentration verwendet. Alternativ könnte ein Gaskonzentrationssensor ohne eine Sensorkennlinie kalibriert werden.

Figur 7 zeigt ein Verfahren zur Prüfung und/oder Kalibration der weiteren Gaskonzentrationssensoren 40, 42, welche zur Überwachung einer Gaskonzentration im Umgebungsbereich 46 der Brennstoffzelleneinheit 12 vorgesehen sind. Dabei wird zu einer Beaufschlagung der weiteren Gaskonzentrationssensoren 40, 42 mit dem Prüfgas eine als ein Schlauch ausgebildete Gasverbindungsleitung 76 manuell, im vorliegenden Fall insbesondere händisch, mit den weiteren Gaskonzentrationssensoren 40, 42 verbunden. Alternativ könnten Gaskonzentrationssensoren permanent mit einer Gasverbindungsleitung verbunden sein. Ferner könnte eine Gasverbindungsleitung als ein Rohr ausgebildet sein.

## Patentansprüche

1. Verfahren zu einer Prüfung und einer Kalibration zumindest eines Gaskonzentrationssensors (38; 40; 42), insbesondere eines Wasserstoffgaskonzentrationssensors, eines Brennstoffzellensystems (10), welcher in einem Normalbetriebszustand zu einer Überwachung einer Gaskonzentration, insbesondere einer Wasserstoffgaskonzentration, in einem Abgas und/oder einem Umgebungsbereich (46) einer Brennstoffzelleneinheit (12) vorgesehen ist, wobei der Gaskonzentrationssensor (38; 40; 42) in zumindest einem von einem Normalbetriebszustand verschiedenen Betriebszustand, insbesondere in einem Wartungsbetriebszustand, in zumindest einem Verfahrensschritt (160; 260) in einem mit der Brennstoffzelleneinheit (12) fluidtechnisch verbundenen Zustand geprüft und kalibriert wird, **dadurch gekennzeichnet, dass** zur Kalibration des Gaskonzentrationssensors (38; 40; 42) in zumindest einem Verfahrensschritt (260) eine Sensorkennlinie erstellt wird und anhand der Sensorkennlinie der Gaskonzentrationssensor (38; 40; 42) kalibriert wird.

2. Verfahren nach Anspruch 1, **dadurch gekennzeichnet, dass** zur Prüfung und Kalibration des Gaskonzentrationssensors (38; 40; 42) in zumindest einem Verfahrensschritt (120; 130; 220a-i; 230) eine Gaskonzentration wenigstens eines Bestandteils wenigstens eines Prüfgases auf einen definierten Referenzwert eingestellt wird und in zumindest einem Verfahrensschritt (150; 250a-i) ein Messwert der Gaskonzentration mittels des Gaskonzentrationssensors (38; 40; 42) ermittelt wird.

3. Verfahren nach Anspruch 2, **dadurch gekennzeichnet, dass** der Bestandteil des Prüfgases Wasserstoffgas ist.

4. Verfahren nach Anspruch 2 oder 3, **dadurch gekennzeichnet, dass** zur Prüfung des Gaskonzentrationssensors (38; 40; 42) in zumindest einem Verfahrensschritt (160) der Messwert mit einem mit dem Referenzwert korrelierten Sollwert verglichen wird.

5. Verfahren nach einem der Ansprüche 2 bis 4, **dadurch gekennzeichnet, dass** in zumindest einem Verfahrensschritt (140; 240) zur Erzeugung des Prüfgases wenigstens zwei Gase zusammengeführt werden, wobei zur Erzeugung des Prüfgases wenigstens Wasserstoffgas und ein sauerstoffhaltiges Gas zusammengeführt und gemischt werden.

6. Verfahren nach einem der Ansprüche 2 bis 5, **dadurch gekennzeichnet, dass** wenigstens ein Bestandteil des Prüfgases aus einem Betriebsgas der Brennstoffzelleneinheit (12) gebildet wird.

7. Verfahren nach einem der Ansprüche 2 bis 6, **dadurch gekennzeichnet, dass** das Prüfgas in zumindest einem Verfahrensschritt (140; 240) zumindest abschnittsweise durch wenigstens eine Fluidleitung der Brennstoffzelleneinheit (12) zum Gaskonzentrationssensor (38; 40; 42) geleitet wird.

8. Verfahren nach einem der Ansprüche 2 bis 7, **dadurch gekennzeichnet, dass** zu einer Beaufschlagung des Gaskonzentrationssensors (38; 40; 42) mit dem Prüfgas eine Gasverbindungsleitung (76) manuell mit dem Gaskonzentrationssensor (38; 40; 42) verbunden wird.

9. Verfahren nach einem der vorhergehenden Ansprüche, **dadurch gekennzeichnet, dass** in zumindest einem Verfahrensschritt (110; 210) wenigstens eine mit dem Gaskonzentrationssensor (38; 40; 42) fluidtechnisch verbundene Gasleitung durchgespült wird.

10. Brennstoffzellensystem (10) mit zumindest einem Gaskonzentrationssensor (38; 40; 42) und mit zumindest einer Prüf- und Kalibriereinheit (28), welche in zumindest einem Betriebszustand dazu vorgesehen ist, ein Verfahren nach einem der vorhergehenden Ansprüche auszuführen.

## Claims

1. Method for testing and calibrating at least one gas concentration sensor (38; 40; 42), in particular a hydrogen gas concentration sensor, of a fuel cell system (10), which in a normal operating state is intended for monitoring a gas concentration, in particular a hydrogen gas concentration, in an exhaust gas and/or a surrounding area (46) of a fuel cell unit (12), wherein, in at least one operating state different from a normal operating state, in particular in a maintenance operating state, the gas concentration sensor (38; 40; 42) is tested and calibrated in at least one method step (160; 260) in a state in which it is fluidically connected to the fuel cell unit (12), **characterized in that**, for calibrating the gas concentration sensor (38; 40; 42), in at least one method step (260) a sensor characteristic is created and the gas concentration sensor (38; 40; 42) is calibrated on the basis of the sensor characteristic.

2. Method according to Claim 1, **characterized in that**, for testing and calibrating the gas concentration sensor (38; 40; 42), in at least one method step (120; 130; 220a-i; 230) a gas concentration of at least one constituent of at least one test gas is set to a defined reference value and in at least one method step (150; 250a-i) a measured value of the gas concentration is determined by means of the gas concentration sensor (38; 40; 42).

3. Method according to Claim 2, **characterized in that** the constituent of the test gas is hydrogen gas.

4. Method according to Claim 2 or 3, **characterized in that**, for testing the gas concentration sensor (38; 40; 42), in at least one method step (160) the measured value is compared with a setpoint value correlated with the reference value.

5. Method according to one of Claims 2 to 4, **characterized in that** in at least one method step (140; 240) to produce the test gas at least two gases are brought together, wherein at least hydrogen gas and an oxygen-containing gas are brought together and mixed to produce the test gas.

6. Method according to one of Claims 2 to 5, **characterized in that** at least one constituent of the test gas is formed by an operating gas of the fuel cell unit (12).

7. Method according to one of Claims 2 to 6, **characterized in that** in at least one method step (140; 240) the test gas is passed at least partially through at least one fluid line of the fuel cell unit (12) to the gas concentration sensor (38; 40; 42).

8. Method according to one of Claims 2 to 7, **characterized in that**, for subjecting the gas concentration sensor (38; 40; 42) to the test gas, a gas connecting line (76) is manually connected to the gas concentration sensor (38; 40; 42).

9. Method according to one of the preceding claims, **characterized in that** in at least one method step (110; 210) at least one gas line fluidically connected to the gas concentration sensor (38; 40; 42) is flushed through.

10. Fuel cell system (10) with at least one gas concentration sensor (38; 40; 42) and with at least one testing and calibrating unit (28), which in at least one operating state is intended to carry out a method according to one of the preceding claims.

## Revendications

1. Procédé pour tester et étalonner au moins un capteur de concentration de gaz (38 ; 40 ; 42), en particulier un capteur de concentration d'hydrogène gazeux, d'un système de pile à combustible (10), lequel est prévu, dans un état de fonctionnement normal, pour surveiller une concentration de gaz, en particulier une concentration d'hydrogène gazeux, dans un gaz d'échappement et/ou une zone ambiante (46) d'une unité de pile à combustible (12), dans lequel, dans au moins un état de fonctionnement différent d'un état de fonctionnement normal, en particulier dans un état de fonctionnement de maintenance, lors d'au moins une étape de procédé (160 ; 260), le capteur de concentration de gaz (38 ; 40 ; 42) est testé et étalonné dans un état en communication fluidique avec l'unité de pile à combustible (12), **caractérisé en ce que**, pour étalonner le capteur de concentration de gaz (38 ; 40 ; 42), une courbe caractéristique de capteur est créée lors d'au moins une étape de procédé (260) et le capteur de concentration de gaz (38 ; 40 ; 42) est étalonné sur la base de la courbe caractéristique de capteur.

2. Procédé selon la revendication 1, **caractérisé en ce que**, pour tester et étalonner le capteur de concentration de gaz (38 ; 40 ; 42), lors d'au moins une étape de procédé (120 ; 130 ; 220a-i ; 230), une concentration de gaz d'au moins un constituant d'au moins un gaz de test est réglée à une valeur de référence définie et, lors d'au moins une étape de procédé (150 ; 250a-i), une valeur de mesure de la concentration de gaz est déterminée au moyen du capteur de concentration de gaz (38 ; 40 ; 42).

3. Procédé selon la revendication 2, **caractérisé en ce que** le constituant du gaz de test est de l'hydrogène gazeux.

4. Procédé selon la revendication 2 ou 3, **caractérisé en ce que**, pour tester le capteur de concentration de gaz (38 ; 40 ; 42), lors d'au moins une étape de procédé (160), la valeur de mesure est comparée à une valeur de consigne corrélée à la valeur de référence.

5. Procédé selon l'une quelconque des revendications 2 à 4, **caractérisé en ce que**, lors d'au moins une étape de procédé (140 ; 240) destinée à produire le gaz de test, au moins deux gaz sont combinés, au moins de l'hydrogène gazeux et un gaz contenant de l'oxygène étant combinés et mélangés pour produire le gaz de test.

6. Procédé selon l'une quelconque des revendications 2 à 5, **caractérisé en ce qu'**au moins un constituant du gaz de test est formé à partir d'un gaz de fonctionnement de l'unité de pile à combustible (12).

7. Procédé selon l'une quelconque des revendications 2 à 6, **caractérisé en ce que** le gaz de test est acheminé au moins par sections lors d'au moins une étape de procédé (140 ; 240) à travers au moins une conduite de fluide de l'unité de pile à combustible (12) jusqu'au capteur de concentration de gaz (38 ; 40 ; 42).

8. Procédé selon l'une quelconque des revendications 2 à 7, **caractérisé en ce que**, pour exposer au gaz de test le capteur de concentration de gaz (38 ; 40 ; 42), une conduite de raccordement de gaz (76) est raccordée manuellement au capteur de concentration de gaz (38 ; 40 ; 42).

9. Procédé selon l'une quelconque des revendications précédentes, **caractérisé en ce que**, lors d'au moins une étape de procédé (110 ; 210), au moins une conduite de gaz en communication fluidique avec le capteur de concentration de gaz (38 ; 40 ; 42) est purgée.

10. Système de pile à combustible (10) comportant au moins un capteur de concentration de gaz (38 ; 40 ; 42) et au moins une unité de test et d'étalonnage (28) qui, dans au moins un état de fonctionnement, est prévue pour mettre en œuvre un procédé selon l'une quelconque des revendications précédentes.
